# EUROPÄISCHE PATENTANMELDUNG

(11) **EP 2 450 189 A1**
(43) Veröffentlichungstag der Anmeldung: **09.05.2012**
(21) Anmeldenummer: 10014325.4
(22) Anmeldetag: 05.11.2010
(51) Int. Cl.: B32B 37/12, B32B 15/08

(54) **Verfahren zum Verbinden von Blechteilen zu einem Blechpaket**

(71) Anmelder: Voestalpine Stahl GmbH, 4020 Linz (AT)
(72) Erfinder: Peruzzi, Martin, DI Dr. MSc., 4020 Linz (AT); Fluch, Ronald, DI Dr., 4020 Linz (AT); Stotz, Reinhold, 4052 Ansfelden (AT); Strauß, Bernhard, DI Dr., 4060 Leonding (AT); Dorninger, Franz, DI, 4223 Katsdorf (AT)
(74) Vertreter: Jell, Friedrich

(57) **Zusammenfassung**

Es wird ein Verfahren zum Verbinden von Blechteilen (4) zu einem Blechpaket (11) gezeigt, bei dem Blechteile (4) von einem Blechband (2) mit wenigstens bereichsweise einer Schicht, die aushärtbaren polymeren Klebstoff (12) aufweist, abgetrennt, insbesondere ausgestanzt und diese Blechteile (4) zu einem Blechpaket (11) vorverbunden werden, welches Vorverbinden ein zumindest bereichsweises Plastifizieren des Klebstoffs (12) und ein Zusammenfügen der Blechteile (4) zum Verbinden dieser über den plastifizierten Klebstoff (12) von mindestens einem der Blechteile (4) umfasst, und in einem nachfolgenden Schritt das Blechpaket (11) mit vorverbundenen Blechteilen (4) einer Aushärtung des Klebstoffs (12) zugeführt wird. Um eine vorteilhafte Verbindung zwischen den Blechteilen schaffen zu können, wird vorgeschlagen, dass das Plastifizieren des Klebstoffs (12) einen Eintrag eines Weichmachers (16), insbesondere von H₂O, umfasst.

## Beschreibung

Die Erfindung betrifft ein Verfahren zum Verbinden von Blechteilen zu einem Blechpaket, bei dem Blechteile von einem Blechband mit wenigstens bereichsweise einer Schicht, die aushärtbaren polymeren Klebstoff aufweist, abgetrennt, insbesondere ausgestanzt und diese Blechteile zu einem Blechpaket vorverbunden werden, welches Vorverbinden ein zumindest bereichsweises Plastifizieren des Klebstoffs und ein Zusammenfügen der Blechteile zum Verbinden dieser über den plastifizierten Klebstoff von mindestens einem der Blechteile umfasst, und in einem nachfolgenden Schritt das Blechpaket mit vorverbundenen Blechteilen einer Aushärtung des Klebstoffs zugeführt wird.

Um die Handhabung von mit aushärtbaren Klebeharz beschichteten Blechpaketen zu erleichtern, ist es aus dem Stand der Technik bekannt (DE2446693A1), die ausgestanzten Blechteile zunächst vorzuverbinden, bevor diese weitere Handhabungsschritte durchlaufen bzw. bis deren Klebstoff abschließend ausgehärtet wird. Zum Zwecke des Vorverbindens werden die ausgestanzten Blechteile erwärmt, um mit Hilfe eines Erweichens bzw. Plastifizierens des Klebeharzes eine ausreichende Klebeverbindung herzustellen. Zwar können nun diese zusammenhaltenden Blechteile leichter weiterverarbeitet werden, nachteilig bedarf es jedoch eines vergleichsweise hohen Verfahrensaufwands, weil beim Vorverkleben äußerst genau jene Temperatur eingestellt bzw. eingehalten werden muss, die zwar ein Erweichen des Klebeharzes ermöglicht, ein Aushärten des Klebeharz jedoch nicht zulässt. Tritt nämlich ein Aushärten während des Vorverklebens ein, dann kann damit der abschließende Verfahrensschritt des Aushärtens vergleichsweise stark gestört werden, so dass eine reproduzierbare Herstellung von Blechpaketen nicht gewährleistet werden kann. Außerdem muss beim Vorverbinden insbesondere auf die Wärmeträgheit der Blechpakete Rücksicht genommen werden, um selbst in der Abkühlphase in keinen Aushärtezyklus für den Klebstoff einzutreten. Der Verfahrensschritt des Vorverklebens ist daher vergleichsweise fehleranfällig und schwer einzustellen, so dass mit diesem Verfahren eine hohe Standfestigkeit sowie eine universale Verwendbarkeit für unterschiedliche Bleche nicht gewährleistet werden kann.

Außerdem sind aus dem Stand der Technik Verfahren zum Herstellen von Blechpaketen bekannt (EP0355778B1), bei denen beim Stanzvorgang ein derart hohes Erwärmen der Blechpakete erfolgt, dass auf ein Vorverkleben verzichtet und gleich in diesem Schritt ein Verbacken bzw. Aushärten der Klebeschicht und damit eine feste Verbindung erreicht wird. Zwar kann damit die Gefahr einer unerwünschten Aushärtung umgangen werden, derartige Verfahren und diesbezügliche Vorrichtungen sind jedoch vergleichsweise schwer steuerbar bzw. auch konstruktiv aufwendig. So muss beispielsweise vermieden werden, dass der beheizte Stempel beim Stanzvorgang den Klebstoff bereits aushärtet, bevor das ausgestanzte Blechteil einer Verbindung unterworfen wird. Ebenso können derart hohe Temperaturen des Stempels zu einem Verzug am Blechteil führen, was eine formgenaue Herstellung von Blechpaketen verhindert. Hinzu kommt, dass damit vergleichsweise schwer auf die Parameter zum Aushärten bzw. Verbacken des Backlacks Einfluss genommen werden kann, was nachteilig einen vergleichsweise langen Optimierungsprozess erfordert. Solch "einstufige" Verfahren reagierten des Weiteren auch empfindlich hinsichtlich Parameterschwankungen - sei es durch veränderte Blechparameter, veränderte Blechteileform oder auch durch veränderte Lackparameter -, was ebenso zu einer verminderten Standfestigkeit führen kann.

Die Erfindung hat sich daher die Aufgabe gestellt, ausgehend vom eingangs geschilderten Stand der Technik ein einfach handhabbares Verfahren zu schaffen, mit dem zuverlässig Blechteile zu einem formgenauen Blechpaket verbunden werden können. Außerdem soll das Verfahren besonders flexibel in der Anwendung und tolerant gegenüber Parameteränderungen sowie -schwankungen am zu verarbeitenden Blech sein.

Die Erfindung löst die gestellte Aufgabe dadurch, dass das Plastifizieren des Klebstoffs einen Eintrag eines Weichmachers, insbesondere von H₂O, umfasst.

Umfasst das Plastifizieren des Klebstoffs einen Eintrag eines Weichmachers, so kann damit die Glasübergangstemperatur bzw. Erweichungstemperatur des Klebstoffs gesenkt werden, um so im Gegensatz zum Stand der Technik (DE2446693A1) eine Vorverbindung der Blechpakete mit wenigstens verringerten Temperaturen zu ermöglichen. Damit kann insbesondere vermieden werden, dass der Klebstoff schon beim Vorverbinden aushärtet bzw. teilweise aushärtet, so dass die nachfolgenden Verfahrensschritte, insbesondere der Verfahrensschritt des Aushärtens zum abschließenden Verbinden der Blechteile, unbeeinträchtigt bleiben. Im Gegensatz zum Stand der Technik kann somit ein reproduzierbares Verfahren gewährleistet werden. Hinzu kommt, dass durch verminderte Temperaturbelastungen auch ein Verzug der Blechteile beim Vorverbinden ausgeschlossen werden kann, so dass das Verfahren höchste Genauigkeit erfüllen und damit formgenaue Blechpakete ermöglichen kann. Außerdem können schwer einstellbare bzw. abschätzbare Temperatureinstellungen beim Vorverbinden durch die erfindungsgemäß verminderte Glasübergangstemperatur vermieden werden, so dass ein einfach handhabbares Verfahren zur Verfügung steht, das auch besonders tolerant gegenüber Parameteränderungen und -schwankungen am zu verarbeiteten Blech sein kann. Selbst unterschiedliche Blechdicken sowie veränderte Abmessungen an den Blechteilen können im Einfluss auf das Verbindungsverhalten beim Vorverbinden vermindert werden. Das Verfahren kann sich daher nicht nur durch ein sicheres Vorverbinden und ein sicheres abschließendes Aushärten in seiner Standfestigkeit auszeichnen, sondern ist vorteilhaft besonders vielseitig und somit flexibel und universell anwendbar. Insbesondere hat sich zur Verfahrensvereinfachung H₂O als Weichmacher ausgezeichnet, weil dieser Weichmacher beim abschließenden Aushärten auf einfache Weise aus dem Blechpaket bzw. Klebstoff ausgetrieben werden kann, so dass die Verfahrenseinstellungen der Aushärtung mit bekannten Parametern vornehmbar sind. Es muss an dieser Stelle nicht weiter erwähnt werden, dass H₂O als Verfahrensmittel vergleichsweise einfach handhabbar ist, was im Zusammenhang mit einer verbesserten Energieeffizienz aufgrund vermindertet Verfahrenstemperaturen zu einem besonders kostgengünstigen Verfahren führen kann. Andere Weichmacher sind jedoch durchaus vorstellbar, beispielsweise niedrigmolekulare Verbindungen, insbesondere Phthalsäureester (Dibutylphthalat DBP; Dioctylphthalat DOP), und/oder Alkohol.

Im Allgemeinen haben sich thermoplastische und/oder duroplastische Werkstoffe als polymerer Klebstoff ausgezeichnet, wobei sich bei der Verbindung von Blechteilen thermoplastische und/oder duroplastische Backlacke als Klebstoff bewährt haben, um damit elektromagnetische Bauteile, beispielsweise Rotor- und Statorbleche von elektrische Maschinen, Dynamobleche, Elektrobleche, Drossel oder Transformatorbleche herzustellen. Backlacke auf Basis von Polyvinylbutyral, Polyamide oder Epoxidharz sind im Allgemeinen weiter vorstellbar. Des Weiteren schließt die Erfindung ein, dass wenigstens bereichsweise eine Schicht aushärtbaren polymeren Klebstoff aufweist sowie dass diese Schicht aus aushärtbaren polymeren Klebstoff besteht, um mit diesem Klebstoff eine Vorverklebung mit einem anderen Blechteil zu ermöglichen. Bevorzugt ist die Schicht aus aushärtbaren polymeren Klebstoff außenseitig am Blech vorgesehen, um ein sicheres Vorverkleben zu ermöglichen.

Wird durch den Eintrag an Weichmachern die Glasübergangstemperatur des Klebstoffs des Blechteils auf kleiner gleich der Temperatur des Blechteils beim Zusammenfügen gesenkt, dann kann der Verfahrensschritt des Vorverbindens besonders robust ausgestaltet werden. Temperaturunterschiede an den vorzuverbindenden Blechteilen können nämlich zu keiner Beeinträchtigung der Plastifizierung führen, weil die Glasübergangstemperatur derart gesenkt wird, dass es zu keiner unerwünschten Verfestigung des plastifizierten Klebstoffs mehr kommen kann. Eine eventuelle Temperaturdifferenz zwischen Blechteil und Klebstoff kann somit zu keiner Störung der Klebeverbindung führen, wodurch sich ein standfestes Verfahren zum Vorverkleben ergeben kann. Außerdem kann damit die Temperatur des Blechteils zur Plastifizierung des Klebstoffs genützt werden bzw. dazu beitragen, von zusätzlichen Verfahrensschritten zur Erwärmung des Klebstoffes bzw. des Blechs bzw. Blechbands und/oder Blechteils abzusehen. Es braucht außerdem nicht weiter erwähnt werden, dass mit einem Verzicht auf eine komplizierte und fehleranfällige Temperaturüberwachung bzw. -steuerung eine deutliche Verfahrensvereinfachung ermöglicht werden kann.

Um eine aufwendige Handhabung der Blechteile für den Schritt des Eintragens von Weichmachern in den Klebstoff zu vermeiden, wird bereits vor dem Abtrennen des Blechteils vom Blechband der Weichmacher in den Klebstoff eingetragen. Es kann daher vermieden werden, dass vergleichsweise aufwendige Führungen und Halterungen für die abgetrennten Blechteile vorgesehen werden müssen. Damit können jedoch nicht nur vereinfachte Verfahrensverhältnisse geschaffen werden sondern es kann auch sichergestellt werden, dass der Klebstoff des Blechteils mit ausreichend Weichmacher beaufschlagbar ist. Ebenso können einfacher Unregelmäßigkeiten in der Verteilung des Eintrags an Weichmacher ausgeschlossen werden, was zu einem besonders reproduzierbaren Verfahren führen kann.

Wird der Weichmacher über ein diesen Weichmacher aufweisendes Aerosol in den Klebstoff eingetragen, dann kann damit ein gleichmäßiger Eintrag ermöglicht werden. Eine Gefahr der Bildung von weichmacherfreien Inseln am Klebstoff kann außerdem klein gehalten werden, was zu einem besonders reproduzierbaren und robusten Verfahren führen kann. Insbesondere hat sich Wasserdampf mit H₂O als Weichmacher als vergleichsweise einfach handhabbar herausgestellt, um damit zu einem sicheren Vorverkleben zu gelangen.

Werden beim Vorverbinden die Blechteile unter Druck zusammengefügt, dann kann damit auf einfache Weise für eine ausreichende und sichere physikalische Vorverbindung der Blechteile gesorgt werden. Hinzu kommt, dass über diese physikalische Verklebung auch eine gleichmäßige Verteilung des plastifizierten Klebstoffs zwischen den zu verbindenden Blechteilen einstellbar ist, was für formgenaue Blechpakete und für eine hohe Verbindungsfestigkeit genützt werden kann.

Eine besonders hohe Genauigkeit und Festigkeit des Blechpakets kann gewährleistet werden, wenn beim Aushärten zuerst der Klebstoff im Bereich der Randzone des Blechpakets unter Druck ausgehärtet wird. Solch eine Druckaushärtung, beispielsweise mit Hilfe einer Heizpresse, kann nämlich sicherstellen, dass trotz eventueller Randverformungen eine feste Verklebung der Blechteile erfolgt, bevor der restliche Klebstoff des Blechpakets ausgehärtet wird. Der abschließenden Aushärtung steht daher bereits ein formstabiles Blechpaket zur Verfügung, so dass diese Aushärtung ohne eine Gefahr einer Formänderung durchführbar wird, und daher auch vergleichsweise langen Aushärtungszeiten durchschreitbar werden.

Wird der restliche Klebstoff mit Hilfe der Eigenwärme des Blechpakets druckfrei ausgehärtet, dann kann eine belastungsfreie und zumindest teilweise chemische Aushärtung des Klebstoffs genützt werden, die Festigkeit des Blechpakets noch weiter zu erhöhen. Außerdem können damit Beschädigungen an Oberfläche des Blechpakets vermieden werden, was insbesondere für eine gleichmäßige Oberfläche bzw. makelfreie Isolierung sorgen und damit auch Veränderungen in der elektromagnetischen Eigenschaft des Blechpakets vermeiden kann. Hinzu kommt, dass eine Aushärtung mit Eigenwärme den Vorteil bietet, diese Aushärtung während der Abkühlung des Blechpakets bei Raumtemperatur vorzunehmen, so dass keine besonderen Maßnahmen zur Verfahrensteuerung weiter vorgesehen werden müssen. Ein verhältnismäßig einfach durchführbares Verfahren zum Verbinden von Blechteilen zu einem Blechpaket kann so geschaffen werden.

Eine besondere Temperaturführung des Blechpakets für eine vergleichsweise hohe Festigkeit kann geschaffen werden, wenn beim Aushärten das Blechpaket induktiv erwärmt wird.

Die Erfindung hat sich außerdem ausgehend vom eingangs geschilderten Stand der Technik die Aufgabe gestellt, eine konstruktiv einfache und standfeste Vorrichtung zum Verbinden von Blechteilen zu einem Blechpaket zu schaffen.

Die Erfindung löst die gestellte Aufgabe dadurch, dass die Plastifizierungseinrichtung eine Weichmachereinheit zum Eintrag eines Weichmachers, insbesondere von H₂O, in den Klebstoff aufweist.

Weist die Plastifizierungseinrichtung eine Weichmachereinheit zum Eintrag eines Weichmachers in den Klebstoff auf, so kann auf komplexe Steuerungsmaßnahmen bzw. konstruktive Ausführungen im Bereich des Vorverbindens der Blechteile zu einem Blechpaket verzichtet werden. Außerdem kann der Eintrag von H₂O als Weichmacher vergleichsweise einfach konstruktiv und verfahrenssicher gelöst werden, so dass neben einer kostengünstigen Vorrichtung auch eine besonders hohe Standfestigkeit erreicht werden kann. Die Weichmachereinheit muss nur derart ausgestaltet sein, dass der Weichmacher auf den Klebstoff aufgebracht werden kann. Hierfür sind auf den Klebstoff gerichtete Düsen oder auch ein Bad vorstellbar, durch das der Klebstoff geführt wird.

Eine konstruktive Einfachheit kann insbesondere erreicht werden, wenn die Weichmachereinheit wenigstens eine auf den Klebstoff gerichtete Düse aufweist, durch die der Weichmacher strömt. Damit kann insbesondere Wasserdampf genau auf den Klebstoff gerichtet werden, was für eine besondere Plastifizierung des Klebstoffs sorgen kann.

Eine kompakte Vorrichtung kann geschaffen werden, wenn die Weichmachereinheit zwischen zwei Schneiden der Abtrenneinrichtung angeordnet ist. Außerdem kann so der Eintrag an Weichmacher unmittelbar vor dem nächsten Bearbeitungsschritt vorgenommen werden, um so ein ungewolltes Ausgasens des Weichmachers zu vermeiden.

Weist die Abtrenneinrichtung ein Stanzwerkzeug auf, das zum Druckbelasten der Blechteile beim Vorverbinden in Richtung der Blechteile auf der Stapeleinrichtung verschiebbar gelagert ist, dann kann die Abtrenneinrichtung zum Verpressen des Blechpakets mitverwendet werden. Eine konstruktive Einfachheit der Vorrichtung kann damit geschaffen werden.

Die Aushärteeinrichtung weist wenigstens eine Presse mit einer Induktionsspule zum Aushärten des Randbereichs des Blechpakets unter Druck auf, um damit diesen Bereich einer vorzeitigen Aushärtung zuführen zu können. Damit kann das Blechpaket besonders robust und standfest für weitere Aushärtungsschritte vorbereitet werden.

Die innenliegenden Bereiche des Blechpakets können so einem eigenen Zyklus der Aushärtung unterworfen werden, wenn die Aushärteeinrichtung eine Lagerstelle zum druckfreien Aushärten des restlichen Klebstoffs mit Hilfe der Eigenwärme des Blechpakets aufweist. Damit kann nicht nur der Klebstoff auf der Oberfläche des Blechpaktes beschädigungsfrei ausgehärtet werden, sondern es kann auch im Inneren des Blechpakets eine besonders vorteilhafte Aushärtung ermöglicht werden, um eine hohe Festigkeit zu erreichen.

Die Erfindung kann sich daher besonders dadurch auszeichnen, wenn ein Weichmacher, insbesondere H₂O, zum Senken der Glasübergangstemperatur eines auf einem Blechteil vorgesehenen, aushärtbaren polymeren Klebstoffs beim Verbinden mit einem anderen Blechteil zu einem Blechpaket verwendet wird. Insbesondere hat sich hierfür Backlack als Klebstoff ausgezeichnet.

In den Figuren ist beispielsweise der Erfindungsgegenstand dargestellt. Es zeigen
Fig. 1. eine aufgerissene Seitenansicht auf eine Vorrichtung zum Verbinden von Blechteilen zu einem Blechpaket,
Fig. 2 eine vergrößerte Ansicht auf die Plastifizierungseinrichtung,
Fig. 3 eine vergrößerte Teilansicht auf das Zusammenfügen der Blechpakete,
Fig. 4 eine Draufsicht auf das teilweise abgerissene Blechpaket während der Aushärtung seiner Randzone und
Fig. 5 eine Seitenansicht auf das Blechpaket beim Endaushärten.

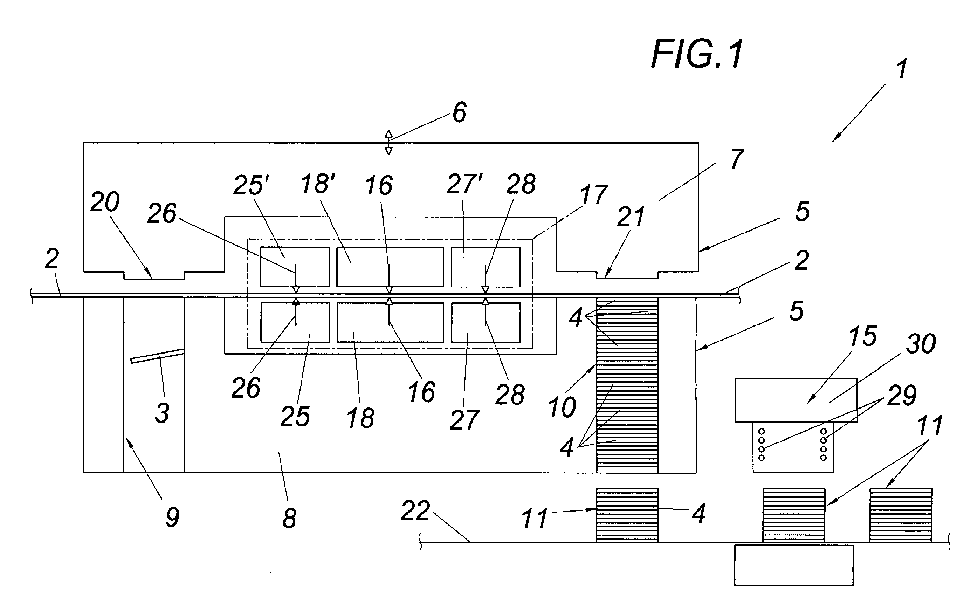

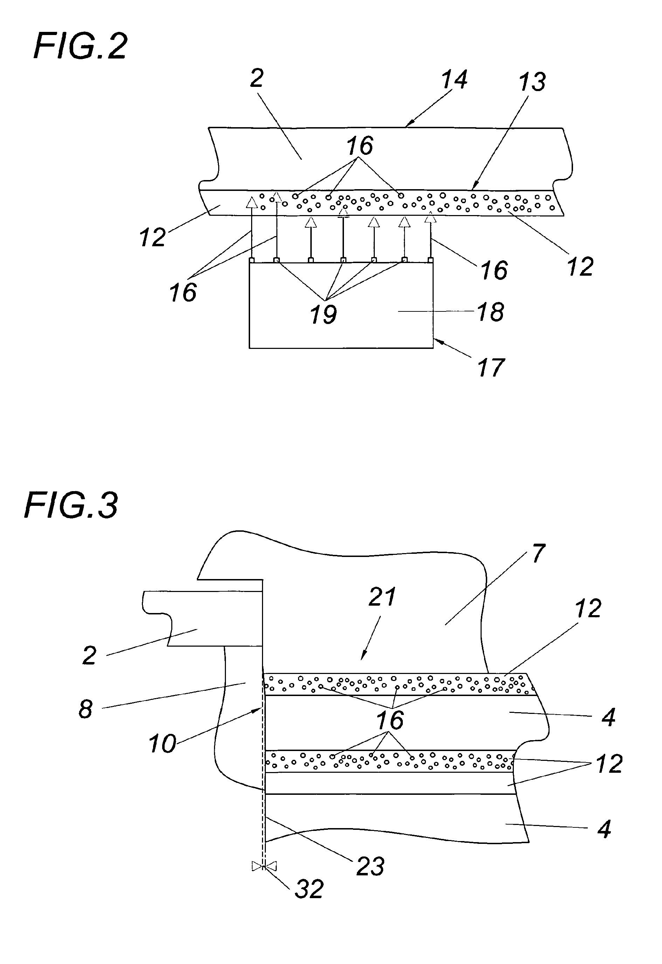

Die nach Fig. 1 beispielsweise dargestellte Vorrichtung 1 zeigt ein Blechband 2, von dem Blechteile 3 und 4 abgetrennt werden. Zu diesem Zweck ist eine Abtrenneinrichtung 5 vorgesehen, die durch Auf- und Abbewegungen 6 seines Schneidwerkzeugs 7 im Zusammenwirken mit seinem Unterwerkzeug 8 aus dem Blechband 2 Blechteile 3 und 4 ausstanzen kann. Diese Blechteile 3 und 4 werden durch den Stanzvorgang in je einen Schacht 9 und 10 gedrängt, wo diese vom Blechband 2 wegbewegbar sind. Ebenso ist ein Abtrennen eines Blechteils 4 mit einem Laser vorstellbar, was nicht näher dargestellt worden ist. Die im Schacht 10 aufgenommenen Blechteile 4 werden in weiterer Folge zu einem Blechpaket 11 vorverbunden, damit diese handhabungsfreundlich als eine Bearbeitungseinheit den nächsten Verfahrensschritten zur Verfügung stehen. Zu diesem Zweck wird der Klebstoff 12, der vorzugsweise vollflächig auf beiden Längsseiten 13 und 14 des Blechbands 2 aufgebracht ist, plastifiziert, so dass beim Zusammenfügen der Blechteile 4 eine physikalische Verklebung zwischen diesen Blechteilen 4 ermöglicht werden kann. Dies kann insbesondere der Fig. 2 entnommen werden. Das den Schacht 10 verlassende und vorverklebte Blechpaket 11 kann in weiterer Folge - wie bekannt - einer Aushärtung mit Hilfe einer Aushärteeinrichtung 15, beispielsweise umfassend einen Ofen, Presse bzw. Heizpresse und einen Lagerpatz, unterworfen werden. Zu diesem Zweck werden die aus dem Schacht 10 austretenden Blechpakete 11 auf einer Fördereinrichtung 22 vorgesehen. Um nun zu vermeiden, dass beim Vorverkleben die Klebeschicht 12 bereits einen Aushärtungszyklus durchläuft, wird erfindungsgemäß vorgeschlagen, dass das Plastifizieren des Klebstoffs 12 einen Eintrag eines Weichmachers 16 umfasst, was insbesondere der Fig. 2 entnommen werden kann. Der Weichmacher 16 dringt nun in den Klebstoff 12 ein. Der Verständlichkeit halber ist der Weichmacher 16 kreisförmig abgrenzt im Klebstoff 12 dargestellt worden. Dies schließt jedoch nicht aus, dass sich der Weichmacher 16 im Klebstoff 12 löst, sowie ist jede andere Verbindungsart vorstellbar. Zum Einbringen des Weichmachers 16 in den Klebstoff 12 weist die Vorrichtung 1 eine Plastifizierungseinrichtung 17 mit einer Weichmachereinheit 18 auf. Über die Weichmachereinheit 18 wird nun die Klebeschicht 12 des Blechbands 2 mit Weichmacher 16 beaufschlagt, beispielsweise sind dafür Düsen 19 vorgesehen, die - auf die Längsseite 13 des Blechbands 2 gerichtet - Weichmacher 16 auf den vorbeigeführten Klebstoff 12, und zwar über seine Breite am Blechband 2, sprühen. Eine einfache Ausführung des Weichmachers 16 kann H₂O darstellen, was beispielsweise als Wasserdampf auf den Klebstoff 12 aufgebracht werden kann. Auch ist vorstellbar hierfür den Klebstoff 12 in ein Wasserbad einzubringen, was nicht näher dargestellt worden ist. Das Wasser dringt nun in den Klebstoff 12 ein, wodurch der Klebstoff 12 teilweise seine innere Festigkeit verliert, erweicht und so auch dessen Glasübergangstemperatur gesenkt werden kann. Solche ein Vorverbinden ist jedoch auch dann noch vorstellbar, wenn lediglich ein oberflächlicher Eintrag an Weichmacher 16 in den Klebstoffs 12 erfolgt, weil auch so für eine ausreichende Plastifizierung gesorgt werden kann.

Vorteilhaft wird Weichmacher 16 derart eingetragen, dass die Glasübergangstemperatur des Klebstoffs 12 auf kleiner gleich der Temperatur des Blechteils 4 beim Zusammenfügen gesenkt wird. Damit kann sowohl die Aushärtungsgefahr des Klebstoffs 12 während des Vorverbindens weiter verringert werden, als auch ohne zusätzliche konstruktive Maßnahmen die Temperaturerhöhung des Blechteils 4 durch das Abtrennen, insbesondere Ausstanzen, vom Blechband 2 genützt werden, den Klebstoff 12 für seine physikalische Anbindung zu plastifizieren.

Diese Senkung der Glasübergangstemperatur wird vor dem Abtrennen bzw. Ausstanzen der Blechteile 4 vorgenommen, um nicht nur eine konstruktive Einfachheit sondern auch eine erhöhte Verfahrensgeschwindigkeit ermöglichen zu können. Zu diesem Zweck ist die Plastifizierungseinrichtung 17 zwischen den beiden Schneiden 20 und 21 des Schneidwerkzeugs 7 vorgesehen, was insbesondere der Fig. 1 entnommen werden kann. Durch die beiden Schneiden 20 und 21 kann nun in einem Stanzschritt einerseits das Blechband 2 vorbereitet werden, in dem aus dem Blechband 2 für das Blechteil 4 nicht benötigte Blechteile 3 abgetrennt werden, und andererseits jene Blechteile 4 geschaffen werden, aus denen sich das Blechpaket 11 zusammenstellt. Eine konstruktive einfache Lösung bzw. ein schnelles Verfahren kann so geschaffen werden.

Das Schneidwerkzeug 7 bringt die Blechteile 4 in einen Schacht 10 ein, der zumindest teilweise ein Untermaß 32 gegenüber den Blechteilen 4 aufweist, was der Fig. 3 entnommen werden kann. Damit kann über das Schneidwerkzeug 7 auf die sich im Schacht 10 stapelnden Blechteile 4 eine Druckbelastung ausgeübt werden, welche Belastung zum physikalischen Vorverbinden der Blechteile 4 genützt werden kann. Der Schacht 10 wirkt so in der Art einer bremsenden Stapeleinrichtung 23. Über den Reibungswiderstand der Blechteile 4 im Schacht 10 bzw. über diese dadurch bedingte Verpressung der Blechteile 4 kann besonders eine physikalische Verklebung sichergestellt werden. Dabei ist es unerheblich, ob auf beiden Seiten des Blechbands 2 bzw. der Blechteile 4 Klebstoff 12 aufgebracht bzw. auch dieser plastifiziert worden ist. Wenigstens ein Klebstoff 12 muss eine Plastifizierung aufweisen, über die eine Vorverklebung mit dem angrenzenden Blechteil 4 möglich wird. So ist in Fig. 3 beispielsweise dargestellt, dass auch nicht plastifizierter Klebstoff 12 mit einem plastifizierten Klebstoff 12 eine Klebeverbindung eingehen kann.

Vorzugsweise werden jedoch die Klebstoffe 12 auf beiden Seiten des Blechbands 2 plastifiziert, wodurch eine besonders standfeste Vorverbindung geschaffen werden kann, insbesondere weil durch Vermischung der Klebstoffe 12 eine Homogenisierung nutzbar wird, um eventuelle Verfahrensschwankungen bzw. Toleranzen beim Plastifizieren ausgleichen zu können.

Die Aushärteeinrichtung 15 weist eine Presse 30, vorzugsweise eine Heizpresse, zum wenigstens teilweisen Aushärten des Blechpakets 11 unter Druck auf. Das Blechpaket 11 kann in diese Presse 30 eingebracht und ausschließlich mit einer Kombination von Temperatur und Zeit ausgehärtet werden, ohne andere Mittel zum Zusammenhalten des Blechpakets 11 vorsehen zu müssen, zumal hierfür die Blechpakete 11 auch vorverbunden eine Formstabilität aufweisen. Formungenauigkeiten bedingt durch derartige Hilfsmittel zum Zusammenhalt sind so auf einfache Weise zu vermeiden.

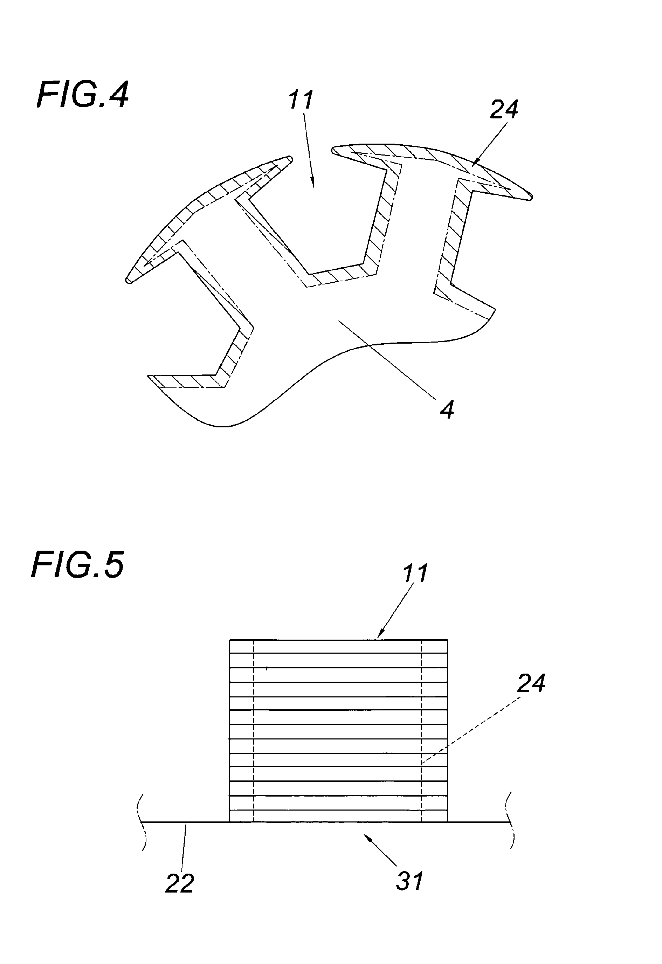

Des Weiteren ist in der Figur 1 eine Anordnung einer Induktionsspule 29 bei der Presse 30 ersichtlich, über die der Randbereich 24 des eingebrachten Blechpakets 11 erhöht erwärmt und damit einer vorzeitigen Aushärtung unterworfen werden kann, bevor der restliche Klebstoff 12 aushärtet bzw. ausgehärtet wird. Eine derartige randseitige Aushärtung ist beispielsweise nach Fig. 4 dargestellt, wobei die Grenze des Randbereichs 24 gegenüber dem Rand des Blechpakets 11 auch unregelmäßig beabstandet verlaufen kann. Solch chemisch vernetzte Randbereiche 24 können so für eine deutlich verbesserte Festigkeit am fertigen Blechpaket 11 sorgen, welches hier beispielsweise als Blechpaket für einen Rotor einer elektrischen Maschine ausgeführt ist. In diesem Zusammenhang hat sich die induktive Erwärmung des Blechpakets 11 als besonders vorteilhaft herausgestellt, weil damit auf individuelle geometrische Festigkeitsanforderungen am Blechpaket 11 Rücksicht genommen werden kann.

Diese Festigkeit kann noch weiter erhöht werden, in dem die Aushärteeinrichtung 15 gemäß Fig. 5 eine Lagerstelle 31 zum druckfreien Aushärten des restlichen Klebstoffs 12 mit Hilfe der Eigenwärme des Blechpakets 11 aufweist. Eine derartige Aushärtung erfolgt der Einfachheit halber bei Raumtemperatur. Versuche zeigten auf Grundlage dieser druckfreien Endaushärtung eine hervorragende Belastbarkeit des damit verbackenen Blechpakets 11. Nahezu eine erhöhte Belastungsgrenze in der Abreißfestigkeit gegenüber herkömmlich hergestellten Blechpaketen konnte nachgewiesen werden.

Es braucht nicht weiter darauf hingewiesen werden, dass anstatt einer Presse auch andere Mittel zur Initialisierung der Aushärtung des Randbereichs des Blechpakets vorstellbar sind. Infrarotstrahler, UV-Strahler, Mittel zur Hochfrequenzerwärmung, ein Chemikalienverdampfer sind Beispiele für derartige Mittel.

Je nachdem ob beidseitig am Blechband 2 bzw. an den Blechteilen 4 ein Klebstoff 12 zu plastifizieren ist, weist die Plastifizierungseinrichtung 17 zwei Weichmachereinheiten 18 und 18' auf, die beispielsweise parallel mit Wasserdampf als Weichmacher 16 die jeweilige Klebeschicht 12 erweichen. Außerdem kann die Plastifizierungseinrichtung 17 eine Vorerwärmungseinheit 25, angeordnet vor der Weichmachereinheit 18, aufweisen, um ein eventuelles zusätzliches Erwärmen des Klebstoffs 12 durchzuführen. Dies kann besonders nützlich sein, wenn die Glasübergangstemperatur des Klebstoffs 12 durch den Eintrag des Weichmachers 16 für die Vorverklebung nicht ausreichend gesenkt werden kann, was beispielsweise durch eine geforderte erhöhte Prozessgeschwindigkeit vorstellbar ist. Eine Vorerwärmungseinheit 25 und 25' kann nun wieder auf beiden Längsseiten 13 und 14 des Blechbands 2 angeordnet sein, wobei ein Erwärmen des Klebstoffs 12 beispielsweise auch durch Heißluft 26 erfolgen kann. Ergänzend und alternativ ist vorstellbar, den Weichmacher 16 bzw. auch den Wasserdampf zu erwärmen, um damit denselben Effekt zu erreichen. Des Weiteren ist der Plastifizierungseinrichtung 17 eine Beschichtungseinheit 27 zugeordnet, mit der gegebenenfalls ein Trennmittel 28 auf das Blechband 2 aufgebracht werden kann, um ein Verkleben der Blechpakete 11 im Schacht 10 zu vermeiden bzw. die Blechpakete 11 voneinander verbessert trennen zu können. Diese Beschichtungseinheit 27 kann auf beiden Seiten des Blechbands vorgesehen sein, wie der Fig. 1 mit Hilfe der Beschichtungseinheiten 27 und 27' dargestellt worden ist.

## Patentansprüche

1. Verfahren zum Verbinden von Blechteilen (4) zu einem Blechpaket (11), bei dem Blechteile (4) von einem Blechband (2) mit wenigstens bereichsweise einer Schicht, die aushärtbaren polymeren Klebstoff (12) aufweist, abgetrennt, insbesondere ausgestanzt und diese Blechteile (4) zu einem Blechpaket (11) vorverbunden werden, welches Vorverbinden ein zumindest bereichsweises Plastifizieren des Klebstoffs (12) und ein Zusammenfügen der Blechteile (4) zum Verbinden dieser über den plastifizierten Klebstoff (12) von mindestens einem der Blechteile (4) umfasst, und in einem nachfolgenden Schritt das Blechpaket (11) mit vorverbundenen Blechteilen (4) einer Aushärtung des Klebstoffs (12) zugeführt wird, **dadurch gekennzeichnet, dass** das Plastifizieren des Klebstoffs (12) einen Eintrag eines Weichmachers (16), insbesondere von H₂O, umfasst.

2. Verfahren nach Anspruch 1, **dadurch gekennzeichnet, dass** durch den Eintrag an Weichmacher (16) die Glasübergangstemperatur des Klebstoffs (12) auf insbesondere kleiner gleich der Temperatur des Blechteils (4) beim Zusammenfügen gesenkt wird.

3. Verfahren nach Anspruch 1 oder 2, **dadurch gekennzeichnet, dass** vor dem Abtrennen des Blechteils (4) vom Blechband (2) der Weichmacher (16) in den Klebstoff (12) eingetragen wird.

4. Verfahren nach Anspruch 1, 2 oder 3, **dadurch gekennzeichnet, dass** der Weichmacher (16) über ein den Weichmacher (16) aufweisendes Aerosol, insbesondere über Wasserdampf, in den Klebstoff (12) eingetragen wird.

5. Verfahren nach einem Anspruch 1 bis 4, **dadurch gekennzeichnet, dass** beim Vorverbinden die Blechteile (4) unter Druck zusammengefügt werden.

6. Verfahren nach einem der Ansprüche 1 bis 5, **dadurch gekennzeichnet, dass** beim Aushärten zuerst der Klebstoff (12) im Bereich der Randzone (24) des Blechpakets (11) unter Druck und dann der restliche Klebstoff (12) des Blechpakets (11) ausgehärtet werden.

7. Verfahren nach Anspruch 6, **dadurch gekennzeichnet, dass** der restliche Klebstoff (12) mit Hilfe der Eigenwärme des Blechpakets (11) druckfrei ausgehärtet wird.

8. Verfahren nach Anspruch 6 oder 7, **dadurch gekennzeichnet, dass** beim Aushärten das Blechpaket (11) induktiv erwärmt wird.

9. Vorrichtung zum Verbinden von Blechteilen (4) zu einem Blechpaket (11), mit einem wenigstens teilweise aushärtbaren polymeren Klebstoff (12) aufweisenden Blechband (2), mit einer Abtrenneinrichtung (5) zum Abtrennen von Blechteilen (4) vom Blechband (2), mit einer Plastifizierungseinrichtung (17) zum Plastifizieren des Klebstoffs (12), mit einer Stapeleinrichtung (23) für die abgetrennten Blechteile (4) zum Vorverbinden der Blechteile (4) zu einem Blechpaket (11) und mit einer Aushärteeinrichtung (15) zum abschließenden Aushärten der Klebstoffs (12) des Blechpakets (11), **dadurch gekennzeichnet, dass** die Plastifizierungseinrichtung (17) eine Weichmachereinheit (18) zum Eintrag eines Weichmachers (16), insbesondere von H₂O, in den Klebstoff (12) aufweist.

10. Vorrichtung nach Anspruch 9, **dadurch gekennzeichnet, dass** die Weichmachereinheit (18) wenigstens eine auf den Klebstoff (12) gerichtete Düse (19) aufweist, durch die der Weichmacher (16), insbesondere Wasserdampf, strömt.

11. Vorrichtung nach Anspruch 9 oder 10, **dadurch gekennzeichnet, dass** die Weichmachereinheit (18) zwischen zwei Schneiden (20, 21) der Abtrenneinrichtung (5) angeordnet ist.

12. Vorrichtung nach Anspruch 9, 10 oder 11, **dadurch gekennzeichnet, dass** die Abtrenneinrichtung (5) ein Schneidwerkzeug (7) aufweist, das zum Druckbelasten der Blechteile (4) beim Vorverbinden in Richtung der Blechteile (4) auf der Stapeleinrichtung (23) verschiebbar gelagert ist.

13. Vorrichtung nach einem der Ansprüche 9 bis 12, **dadurch gekennzeichnet, dass** die Aushärteeinrichtung (15) wenigstens eine Presse mit einer Induktionsspule (29) zum vorzeitigen Aushärten des Randbereichs (24) des Blechpakets (11) unter Druck aufweist.

14. Vorrichtung nach Anspruch 13, **dadurch gekennzeichnet, dass** die Aushärteeinrichtung (15) eine Lagerstelle (31) zum druckfreien Aushärten des restlichen Klebstoffs (12) mit Hilfe der Eigenwärme des Blechpakets (11) aufweist.

15. Verwendung eines Weichmachers (16), insbesondere H₂O, zum Senken der Glasübergangstemperatur eines auf einem Blechteil (4) vorgesehenen, aushärtbaren polymeren Klebstoffs (12), insbesondere Backlacks, beim Verbinden mit einem anderen Blechteil (4) zu einem Blechpaket (11).
